(19) Europäisches Patentamt
European Patent Office
Office européen des brevets

(11) EP 1 486 323 B1

(12) **EUROPEAN PATENT SPECIFICATION**

(45) Date of publication and mention of the grant of the patent:
**17.10.2012 Bulletin 2012/42**

(21) Application number: **03705169.5**

(22) Date of filing: **14.02.2003**

(51) Int Cl.:
***B32B 7/06*** *(2006.01)* ***B32B 5/26*** *(2006.01)*
***A41D 31/02*** *(2006.01)* ***B32B 27/12*** *(2006.01)*

(86) International application number:
**PCT/JP2003/001566**

(87) International publication number:
**WO 2003/068495 (21.08.2003 Gazette 2003/34)**

(54) **LAMINATED FABRIC**

MEHRSCHICHTIGES TEXTILES FLÄCHENGEBILDE

TISSU CONTRECOLLE

(84) Designated Contracting States:
**AT BE BG CH CY CZ DE DK EE ES FI FR GB GR HU IE IT LI LU MC NL PT SE SI SK TR**

(30) Priority: **14.02.2002 JP 2002037147**

(43) Date of publication of application:
**15.12.2004 Bulletin 2004/51**

(73) Proprietor: **W.L. Gore & Associates, Co., Ltd.**
**Tokyo 108-0075 (JP)**

(72) Inventors:
- **SADATO, Hiroki,**
**JAPAN GORE-TEX INC.**
**Tokyo 156-8505 (JP)**
- **ISHII, Hirokazu,**
**JAPAN GORE-TEX INC.**
**Tokyo 156-8505 (JP)**

(74) Representative: **Shanks, Andrew et al**
**Marks & Clerk LLP**
**Aurora**
**120 Bothwell Street**
**Glasgow**
**G2 7JS (GB)**

(56) References cited:
**WO-A1-93/21013 JP-A- 5 031 854**
**US-A- 5 204 156**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 486 323 B1

## Description

### [Detailed Description of the Invention]

### [Field of Industrial Utilization]

The present invention relates to a laminated fabric and a textile product with exceptional hand and good soil resistance, wind resistance, softness, productivity, durability, and other properties, as well as to a method for manufacturing the textile product.

### [Prior Art]

Well-known techniques for providing a water- and wind-proof fabric include laminating a waterproof film on a fabric via an adhesive or applying a waterproof coating. Although these finishing processes tend to provide a water- and wind-proof fabric, problems are presented insofar as the original hand and drape of the fabric are compromised, and the product becomes stiff, bulky, and otherwise uncomfortable.
A method for solving such problems is presented in JP (Kokoku) 6-61909 (Reference 1), wherein jeans with a soft hand are obtained by bonding a plastic film to the back-surface of a denim foundation via a water-insoluble adhesive, bonding the rear-surface fabric to the surface on the opposite side of this plastic film with a water-soluble adhesive, cutting and stitching the resulting laminate, and rinsing the product in water to dissolve the water-soluble adhesive and thereby remove only the rear fabric.
Nevertheless, when fabric made from fibers having a coarse denier, fabric with a heavy basis weight, textured fabric such as twill fabric with a checkered pattern, jacquard, or another more fashionable and decorative fabric is used as the front-surface fabric for the product of the method of reference 1, there is an increase in roughness on the bond side of the fabric; therefore, it is necessary to apply large amounts of the water-insoluble adhesive in order for the plastic film and top-surface fabric to be bonded with sufficient adhesive strength. A problem is accordingly encountered in that a hand-softening effect inevitably becomes difficult to obtain because of the hard hand of the resulting laminated fabric. Moreover, the increase in the amount of adhesive applied at the time of lamination also increases the cost of the starting materials.
According to Reference 1, a simple structure is employed whereby the laminated rear-surface fabric is stitched and then peeled from the plastic film by rinsing the product with water in order to remove the water-soluble adhesive. However, it becomes necessary in such circumstances to perform a resin pretreatment with an acrylic resin coating or antislip agent and increase the density of the rear-surface fabric such that the stitched regions do not shift when the textile product is worn or laundered. This type of treatment has many disadvantages insofar as the selection of the rear-surface fabric is limited, the cost of the fabric itself increases, the fabric has greater mass, the transparency declines, and both the hand and texture of the fabric deteriorate.
The top-surface fabric side of the textile product becomes soiled by oil, dirt, and other contaminants when the textile product is worn. In the case of the laminated fabric in reference 1, the top-surface fabric and plastic film are laminated via a water-insoluble adhesive and are always in a state of close adhesion. If the textile product is laundered after the top-surface fabric has been soiled, the detergent-containing laundry solution will be blocked by the plastic film and be unable to pass through the top-surface fabric; therefore, even soiling that is easily removed from the fabric alone will remain between the top-surface fabric and the plastic film without having been removed. Moreover, the product life of the textile will decrease when subjected to long-term laundering in order to remove soiling due to the increased friction on the fabric.
A textile product will eventually be discarded after long-term use, either due to damage caused by wear and tear or to changes in style. Recycling of the materials used in old textile products is preferred from the standpoint of environmental concerns. The textile product can be recycled by means of material recycling or thermal recycling. However, the former type of recycling requires classification and recovery of materials; i.e., the laminated fabric must be separated from the plastic film when the materials used in the old textile product are recycled for use in starting materials. The rear-surface fabric of the laminated fabric in reference I can, from the start, be separated from the plastic film and easily recovered; however, the front-surface fabric has a higher mass percentage than the rear-surface fabric, and cannot be easily separated therefrom because it is firmly bonded to the plastic film with a water-insoluble adhesive. A problem accordingly exists insofar as the materials cannot be recovered at a high rate of recovery.
Furthermore, wind resistance and water resistance become important functions when a textile product is used in bicycling or outdoor gear. The stitched regions (i.e., the reverse side) of a textile product in which a waterproof fabric is employed are waterproofed with seam tape, but the stitched regions of the rear-surface fabric of a textile product made from the laminated fabric in reference 1 separate from the plastic film when rinsed with water. A problem accordingly exists insofar as the stitched regions are difficult to seal.

**[Problems That the Invention Is Intended to Solve]**

It is an object of the present invention to provide a high-performance laminated fabric and a textile product that have soft hand and are inexpensively produced, as well as a method for manufacturing these textile products.

**[Means Used to Solve the Above-Mentioned Problems]**

In order to solve the above-mentioned problems, the inventors performed various studies of methods for improving hand, durability, soil resistance, wind resistance, water resistance, durability, the recycling rate, and other properties of laminated fabrics made from a fabric and plastic film or another durable film. As a result, they discovered that hitherto unexpected effects are exhibited by laminated fabrics prepared by using a water-soluble adhesive or other temporary adhesive to bond a fabric that serves as the top-surface fabric with a durable film, and using a water-insoluble adhesive or other permanent adhesive to bond a fabric that serves as the rear-surface fabric with the other side of the durable film.
In other words, fabrics made from fibers with a coarse denier, fabrics with a heavy basis weight, textured fabrics such as twill fabric with a checkered pattern, jacquard, or other more fashionable and decorative fabrics have a very rough surface; and when laminated fabric that has been prepared by using a water-soluble adhesive or other temporary adhesive to bond such a fabric as the top-surface fabric with a durable film and a water-insoluble adhesive or other permanent adhesive to bond the rear-surface fabric with the durable film is cut and stitched to make a textile product, and the product is then rinsed with water or subjected to another aftertreatment step in order to peel the film from the rear-surface fabric, the hand of the front-surface fabric will not be compromised, and a textile product with a softer texture and drape can be obtained.
The rear-surface fabric is bonded using a durable film and a permanent adhesive. Therefore, the threads of even thin woven and knit fabrics will be fixed to the film via the permanent adhesive. Consequently, the problems related to seam shifting, dimensional changes due to laundering, and the like do not occur. It is accordingly unnecessary to increase the density or perform an aftertreatment to prevent the seam shifting, as is required with the prior art, and a broader range of fabrics can be selected. Costs are accordingly able to be reduced.
The present invention was perfected based on the above-mentioned findings.
In other words, the present invention provides the following laminated fabric, textile products, and method for manufacturing textile products.

(1) A laminated fabric as defined in claim 1
(2) The laminated fabric according to (1), characterized in that the durable film is a waterproof, moisture-permeable film.
(3) The laminated fabric according to (2), characterized in that the waterproof, moisture-permeable film is a porous polytetrafluoroethylene film.
(4) The laminated fabric according to (3), characterized in that the surface of the porous polytetrafluoroethylene film is coated with a water/oil repellent.
(5) The laminated fabric according to (3) or (4), characterized in that a continuous coating of a hydrophilic resin is provided to one or both sides of the porous polytetrafluoroethylene film.
(6) The laminated fabric according to any of (1) through (5), characterized in that the basis weight of the front-surface fabric is greater than the basis weight of the rear-surface fabric.
(7) The laminated fabric according to any of (1) through (6), characterized in that the front-surface fabric is a woven fabric and the rear-surface fabric is a knit fabric.
(8) The laminated fabric according to any of (1) through (7), characterized in that the temporary adhesive is a water-soluble adhesive.
(9) A textile product, characterized in comprising the laminated fabric according to any of (1) through (8).
(10) The textile product according to (9), characterized in that some or all of the stitched regions in the textile product are seal-treated with seam tape.
(11) The textile product according to (9) or (10), characterized in that the textile product is subjected to an aftertreatment for separating the front-surface fabric and the durable film, and the front-surface fabric and durable film are peeled apart.
(12) The textile product according to (11), characterized in that the temporary adhesive is a water-soluble adhesive, and the aftertreatment is a water-rinse treatment
(13) The textile product according to any of (9) through (12), characterized in being rain or cold weather gear.
(14) A method for manufacturing a textile product, characterized in that the laminated fabric according to any of (1) through (8) is cut and stitched to make a textile product, after which an aftertreatment is performed whereby the front-surface fabric and durable film are peeled apart.

(15) A method for manufacturing a textile product, characterized in that the laminated fabric according to any of (1) through (8) is cut and stitched, after which the seams are seal-treated with seam tape to make a textile product, and an aftertreatment is performed whereby the front-surface fabric and the durable film are peeled apart.

**[Embodiments of the Invention]**

The laminated fabric of the present invention is characterized in being composed of durable film, a front-surface fabric (front fabric) and rear-surface fabric (rear fabric), with a temporary adhesive layer being used to laminate the front-surface fabric on one side of the durable film, and a permanent adhesive layer being used to laminate the rear-surface fabric laminated on the other side of this durable film.

The front-surface fabric and durable film of the laminated fabric of the present invention are used in a separated state in actual textile products. Therefore, any dirt that has adhered to the front-surface fabric will be able to be washed off at the same level of efficacy encountered in common textile products because the front-surface fabric is cleaned when the laundering solution passes therethrough during laundering.

When textile products made from the laminated fabric of the present invention wear out and are eventually submitted for material recycling, the front-surface fabric can be easily recovered, thereby enabling a higher material recovery rate to be obtained.

The density of the rear-surface fabric of the laminated fabric of the present invention may be made very low, and a permanent adhesive is used to create a constant bond between the rear-surface fabric and film. Consequently, by sealing the stitched regions with seam tape, it becomes possible to cover the needle holes created by stitching, while also providing wind- and water-resistance.

The present invention will be described below in detail using the drawings.

Figure 1 is a structural diagram that schematically represents the structure of a laminated fabric 1a of the present invention. This laminated fabric is obtained by using a temporary adhesive 2 to bond a front-surface fabric 1 with a durable film 3 and a permanent adhesive 4 to bond a rear-surface fabric 5 to the reverse side of the durable film 3.

This laminated fabric 1a retains a state wherein the front-surface fabric, film, and rear-surface fabric are bonded as one unit via a temporary adhesive and permanent adhesive until the fabric 1a is cut and stitched into a textile product. However, the front-surface fabric 1 and the film 3 are temporarily bonded by the temporary adhesive 2; therefore, the front-surface fabric 1 and film 3 can be peeled apart when necessary. The peeled front-surface fabric 1 is also separate from the film 3; therefore, the hand and drape of the front-surface fabric 1 will be unaffected by the film 3, and the original hand and drape of the front-surface fabric will be retained.

The laminated fabric can be worked as a single laminated fabric unit before being cut and stitched. Therefore, the laminated fabric can be made into a textile product by a method that is simpler than methods whereby the front-surface fabric and the rear-surface fabric are individually cut, and these parts are subsequently combined with one another and stitched.

This laminated fabric is obtained by fixing the film 3 to the rear-surface fabric using the permanent adhesive 4. Therefore, it is very durable against pulling, tearing, and other external physical stresses.

Figure 2 schematically shows a sealed stitched region of the laminated fabric of the present invention in a cross-sectional view. The folded portions at the ends of the laminated fabric 1a are stitched together at stitched regions 7, with the top-surface fabric folded over itself. The inside of the folded portions of the laminated fabric 1a (rear-surface fabric side) are sealed by a seam tape 6 so as to cover the stitched regions and the ends of the laminated fabric. As a result, it is possible to prevent drops of water and air from flowing in through the needle holes formed in the stitched regions, thereby rendering the textile product wind- and water-proof.

The durable film that is used as a structural material of the laminated fabric of the present invention does not readily degrade or tear under normal use. A polymer film is generally used, but a metal film, a composite film of metal and a polymer film, or another film can be used depending on the prevailing circumstances. The film is selected as needed in accordance with the use of the laminated fabric.

The thickness of the polymer film is selected as needed according to the application of the laminated film, and is typically 5 to 500 $\mu$m. When the laminated fabric is used for textile products, the film thickness is 5 to 300 $\mu$m, and preferably 10 to 100 $\mu$m,

A variety of conventional materials may be used for the polymer films, with examples including polyurethane resins, acrylic resins, polyvinyl chloride resins, polyester resins, polyethylene resins, polypropylene resins, fluororesins, polyamide resins, and polyimide resins.

The polymer film can contain fillers, flame retarders, colorants, deodorizers, bactericides, conductors, antioxidants, or other additives; and may be air- or moisture-permeable.

When the laminated fabric of the present invention is used for waterproof, moisture-permeable textile products, a waterproof, moisture-permeable film made from polyurethane resin, polyester resin, or fluororesin is preferably used, with porous polytetrafluoroethylene films being particularly preferred among such films due to their exceptional water resistance, moisture permeability, and durability.

The maximum pore diameter of the porous polytetrafluoroethylene film is 0.01 to 10 μm, and preferably 0.1 to 1 μm. A maximum pore diameter that is smaller than 0.01 μm is undesirable because a film will be difficult to fabricate, while a maximum pore diameter exceeding 10 μm is undesirable because the film will have diminished water resistance, low strength, and will be difficult to handle during lamination and other aftertreatment steps. The porosity of the porous polytetrafluoroethylene film is 50 to 98%, and preferably 60 to 95%. The method for measuring the maximum pore diameter is as stipulated by ASTM F-316, and the porosity is calculated from the measured apparent density (ρ) using the following formula in accordance with the apparent density measurement described in JIS K 6885.

$$\text{Porosity (\%)} = (2.2 - \rho)/2.2 \times 100 \qquad (1)$$

If the porosity of the porous polytetrafluoroethylene film is less than 50%, the moisture permeability will deteriorate, while if the porosity exceeds 98%, the strength of the film will decrease.

The thickness of the porous polytetrafluoroethylene film is 5 to 300 μm, and preferably 10 to 100 μm. If the porous polytetrafluoroethylene film is thinner than 5 μm, it handling during manufacture will become complicated, while if it exceeds 300 μ, the flexibility of the film will be compromised, and moisture permeability will deteriorate.

The film thickness is determined from the average thickness as measured with a dial gauge (measured using a 1/1000 mm dial thickness gauge (Teclock), without any other loading besides the spring loading).

The inside surface pores of this porous polytetrafluoroethylene film are preferably covered by a water/oil repellent polymer. In such circumstances, the polymer may have fluorine side chains. Further information relating to such polymers and the method by which a composite with a porous film is obtained are disclosed in WO 94/22928. An example is shown below.

A fluoropolymer (preferably with a fluorinated alkyl segment having 6 to 16 carbons) obtained by polymerizing a fluoroalkyl acrylate and/or fluoroalkyl methacrylate, and represented by the following general formula (1)

[Chemical formula 1]

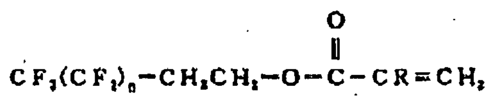

(1)

(where n is an integer of 3 to 13, and R is hydrogen or a methyl group), is preferably used as the polymer for covering the inside surface of the pores. When the inside surface of the pores of the porous film are covered using this polymer, an aqueous microemulsion (average particle diameter of 0.01 to 0.5 μm) of the polymer is produced using a fluorine-containing surfactant (e.g., ammonium perfluorooctanoate), the pores in the porous film are impregnated with this emulsion, and the product is heated. As a result, the water and fluorinated surfactant are removed and the fluorine-containing polymer is melted to coat the inside surface of the pores of the porous film; and a porous film that retains continuous pores and has excellent water/oil repellency is obtained. Other polymers that can be used include "AF Polymer" (trade name of E. I DuPont de Nemours & Co. Inc.) and "Cytop" (trade name of Asahi Glass Co., Ltd.). These polymers can be used to coat the inside surface of pores in the polymer porous film by dissolving these polymers in "Florinate" (3M brand name) or another inert solvent, impregnating the polymer porous film with this solution, and then evaporating off the solvent.

When the porous film is contaminated by any of various contaminants, the contaminant cannot penetrate inside the porous film because the inside surfaces of the pores in the porous polytetrafluoroethylene film are covered by the organic polymer; it is accordingly possible to prevent the hydrophobic properties of the porous film from deteriorating.

The porous polytetrafluoroethylene film may be a composite consisting of a hydrophilic resin film formed on one side of the polytetrafluoroethylene film.

Examples of these hydrophilic resins include polymer materials containing hydroxyl groups, carboxyl groups, sulfonic acid groups, amino acid groups, and other hydrophilic groups. The polymer is preferably able to swell in water, but not be soluble therein. Specific examples include at least partially crosslinked polyvinyl alcohols, cellulose acetates, cellulose nitrates, or other hydrophilic polymers, and hydrophilic polyurethane resins. However, hydrophilic polyurethane resins are particularly preferred when heat resistance, chemical resistance, workability, moisture resistance, and other properties are taken into consideration.

Examples of hydrophilic polyurethane resins are polyester and polyether polyurethanes and prepolymers containing hydroxyl groups, amino groups, carboxyl groups, sulfonic acid groups, oxyethylene groups, and other hydrophilic groups.

Diisocyanates and triisocyanates having two or more isocyanate groups and adducts thereof can be used, either singly or in combinations, as the crosslinking agent for adjusting the melting point (softening point) of the polyurethane as a resin. Moreover, a diol, triol, diamine, or triamine with two or more functional groups can be used as a curing agent for prepolymers with isocyanate terminals. It is preferable to have two functional groups instead of three in order to retain high moisture permeability.

An example of a method for applying the hydrophilic polyurethane or other hydrophilic resin to the porous structure of the porous polytetrafluoroethylene film involves forming a coating solution by using a solvent to produce a solution from (poly)urethane or another resin or using heat to produce a melt, and then using a roll coater or the like to apply the coating solution onto a porous polytetrafluoroethylene film. The appropriate viscosity of the application liquid when applied by impregnation is 20000 cps or less, and preferably 10000 cps or less, at the application temperature. The viscosity is preferably kept at 500 cps or higher when a solution is formed using a solvent, although the outcome will depend on the solvent composition. If the viscosity is too low, the solution will spread through the entire porous polytetrafluoroethylene film after application, making the entire film hydrophilic, and increasing the likelihood that water-resistance would be adversely affected. The viscosity is measured using a type B viscometer made by Toki Sangyo Co., Ltd.

The hydrophilic resin layer formed on at least one side of the porous polytetrafluoroethylene film of the resulting composite film prevents the porous polytetrafluoroethylene film from becoming hydrophilic as a result of exposure to body fat, machine oil, beverages, and other contaminants. The layer also improves the mechanical strength of the film, and helps to produce an exceptional level of durability.

A variety of conventional fabrics are suitable for use as the front-surface fabric used in the laminated fabric of the present invention. There are no special restrictions as to the material used for the front-surface fabric, with natural, synthetic, metal, ceramic, and other fibers able to be used.

The front-surface fabric can be a woven or knit fabric, netting, non-woven cloth, felt, and the like. The type of fabric is selected according to the application of the laminated fabric.

Examples of preferred synthetic fibers include polyamide, polyester, polyurethane, polyolefin, polyvinyl chloride, polyvinylidene chloride, polyfluorocarbon, or polyacrylic fibers. Examples of preferred natural fibers include cotton, hemp, wool and silk. Textiles made from cotton, nylon (polyamide), or polyester are further preferred in terms of their pleasing appearance, strength, durability, and cost.

The front-surface fabric is laminated to the film using a temporary adhesive, and is subsequently peeled therefrom, for the fabric itself to be used independently from the film. Therefore, the front-surface fabric must have seams that will remain intact under the stresses encountered during laundering or the like. The inventors discovered that the shifting of seams during laundering is associated with the basis weight (weight) of the fabric. The front-surface fabric used in the present invention preferably has a basis weight of 40 to 400 $g/m^2$ or higher, and preferably 60 $g/m^2$ or higher. If the basis weight of the fabric is less than 40 $g/m^2$, the density will become excessively low, and seam shifting will occur. Moreover, the fabric will have inadequate abrasion resistance, and will be unable to be used for textile products. A basis weight that exceeds 400 $g/m^2$ is undesirable, because the low weight of the laminated fabric will be compromised, and its hand will harden.

Conventional water-repellency treatments, antistatic treatments, and other conventional treatments can be performed on the front-surface fabric as necessary.

The same material used for the front-surface fabric may be used for the rear-surface fabric of the laminated fabric of the present invention, but a knit fabric is particularly preferred for textile products. The rear-surface fabric is the surface of the textile product that comes into contact with the body. It is accordingly unnecessary to give as much consideration to the appearance of the rear-surface fabric as to the front-surface fabric, and when the textile product is used for rain gear or the like, the sealing performance of the seam tape will be enhanced if a material with a loose mesh is used for the rear-surface fabric; i.e., the bonding side, when the tape is bonded or fused thereon. Therefore, a loose knit is preferable to a textile. Another advantage of using a knit fabric is that the laminated fabric can be lighter in weight, and less expensive than textiles or the like.

A variety of conventional temporary adhesives for temporarily bonding the durable film and the front-surface fabric of the laminated fabric of the present invention can be used as long as the film and fabric can be peeled apart after having been bonded. Examples of such adhesives include those whose adhesive strength is reduced by water, heating, or UV radiation. A water-soluble adhesive whose adhesive strength is reduced by water is preferably used when a laminated fabric is used for textile products.

A variety of conventional water-soluble adhesives can be used, with examples including polyvinyl alcohol, polyacrylamide, polyethylene oxide, polyvinyl pyrrolidone, aqueous vinyl urethane, starch, and carboxymethyl cellulose, all of which can be used singly or in combinations of two or more. The viscosity of the adhesive when applied to the film should be within a range that does not affect its ability to be applied to the film, and is usually 500 cps to 5000 cps, and preferably approximately 2000 cps, at room temperature. Adhesives having a viscosity of higher than 5000 cps at room temperature may still be applied by raising the temperature of application (heating). The solid content of the adhesive

should also be 5 wt% or higher, and preferably 10 wt% or higher. If the solid content is less than 5 wt% after drying, the adhesion between the front-surface fabric and film will be inadequate, which may complicate handling of the laminated product. For instance, if the front-surface fabric peels away from the film during the cutting or other step, it will be difficult for stitching to be performed during the following stitching step. Surfactants, pressure sensitive adhesives, thickeners, and other additives can be added to the above-mentioned water-soluble polymer adhesive. A surfactant or pressure-sensitive adhesive should be added to the water-soluble polymer adhesive when a highly hydrophobic polymer film or front-surface fabric is to be bonded. The addition of a surfactant or pressure-sensitive adhesive will make it possible to reduce the surface tension of the polymer adhesive and provide strong adhesion to the substrate. A thickener can be used to bring the adhesive viscosity to the desired level.

A variety of conventional adhesives can be used as the permanent adhesive for bonding the durable film and rear-surface fabric of the laminated fabric of the present invention as long as the adhesive does not tend to suffer a reduction in strength under normal conditions of use. A water-insoluble adhesive is generally used. Such water-insoluble adhesives include thermoplastic resins and curable resins that are cured by heat, light, or other means.

Specific examples of water-insoluble adhesives that can be used when necessary include polyester, polyamide, polyurethane, silicone, polyacrylic, polyvinyl chloride, polybutadiene, rubber, and polyolefin resins.

Curable hot-melt adhesives are particularly preferred polyurethane resins. Curable hot-melt adhesives assume a solid form at normal temperature, and melt under heat to become a low-viscosity liquid; however, the adhesive will turn into high-viscosity liquid or solid when subjected to a curing reaction in such a state or under further heating. The viscosity of the melt when it has been melted by heat; i.e., before being applied to the rear-surface fabric, will be 500 to 30000 cps, and preferably 500 to 3000 cps. Conversely, the viscosity of the melt that has been thickened; i.e., once the melt has been used to laminate the film and the rear-surface fabric, is 500 to 20000 cps, and preferably 10000 cps or less. The curing of the melt proceeds in the presence of a curing catalyst, a curing agent, or water.

The above-mentioned curable adhesives are already known. Urethane prepolymers that undergo curing when exposed to humidity (water) are a preferred example. These urethane prepolymers can be obtained by carrying out an addition reaction between (I) a polyester polyol, polyether polyol, or another polyol component, and (II) tolylene diisocyanate (TDI), methylene bisphenyl diisocyanate (MDI), xylene diisocyanate, isophorone diisocyanate, or another aliphatic or aromatic diisocyanate or triisocyanate, or other polyisocyanate component. In such circumstances, the urethane prepolymer has isocyanate groups at its terminals, and curing takes place in the presence of moisture. The melting temperature of the urethane prepolymer (50°C or higher, and preferably 80 to 150°C) is somewhat higher than room temperature. This type of urethane prepolymer may be obtained, e.g., from National Starch and Chemical Company under the trade name of "Bond Master." The melt formed from the polymer is viscous enough to be applied to a substrate when heated at 70°C to 150°C. After having been used to bond the front-surface fabric and polymer film together, the melt is cooled to room temperature to become a semi-solid. This makes it possible to prevent the adhesive from excessively penetrating into and spreading through the fabric, and to use wet curing to obtain a soft product exhibiting strong adhesion.

The method used to bond the durable film and rear-surface fabric together should be able to produce a durable bond, as described in the foregoing, and may involve using heat to melt the rear-surface fabric and/or durable film, thereby causing them to fuse together.

A variety of conventional methods such as rolling, spraying, and brush-coating may be used to apply the adhesive used to temporarily bond the film and front-surface fabric.

Examples of preferred methods that may be suitably used for bonding the film and the front-surface fabric include a method whereby a water-soluble adhesive is applied to the film with a roller having a gravure pattern, the front-surface fabric is applied thereon and compressed with a roll, and the product is then heated and dried; and a method whereby a water-soluble adhesive is sprayed on the film, the front-surface fabric is applied thereon and compressed with a roll, and the product is then heated and dried.

The amount of temporary adhesive transferred (i.e., applied) should be selected in consideration of the roughness the front-surface fabric, the hydrophilic and hydrophobic properties of the fabrics relative to adhesion, surface tension and viscosity of the adhesive, and other attributes, but is usually within a range of 5 to 100 g/m$^2$, and preferably 10 to 30 g/m$^2$. If the amount of temporary adhesive transferred is less than 5 g/m$^2$, the resulting adhesion will be inadequate, while if it exceeds 100 g/m$^2$, problems will be encountered insofar as the adhesive will bleed from the front-surface fabric, and stick to the roll in the working apparatus. If too much adhesive is applied, the costs of the materials will increase.

Rolling, spraying, brushing, and other various conventional methods may be used to apply the adhesive that permanently bonds the film and the rear-surface fabric.

Examples of preferred methods for suitably and permanently bonding the film and rear-surface fabric include a method whereby a urethane adhesive is applied to the film with a roller having a gravure pattern, and the rear-surface fabric is applied thereon and compressed with a roll; and a method whereby a urethane adhesive is sprayed on the film, and the rear-surface fabric is applied thereon and compressed with a roll.

Any conventional method can be suitably employed as needed to fuse the film and rear-surface fabric together with

heat; e.g., the heat roll method, whereby the film and rear-surface fabric are heated and fused in a combined state using a heat roll, and the flame bonding method.

With regard to hand, adhesion, yield, and other attributes, the rear-surface fabric and film of the laminated fabric of the present invention are preferably bonded by the method whereby the urethane adhesive is applied with a roll having a gravure pattern, the rear-surface fabric is applied thereon, and the resulting assembly is compressed with a roll.

When the rear-surface fabric and film are laminated and bonded using an adhesive, spot bonding, line bonding, or another type of partial adhesion is used therebetween, with the surface area of the bond being 10 to 95%, and preferably 15 to 50%. The amount of transferred adhesive must be optimized in consideration of the roughness of the rear-surface fabric, fiber density, adhesion, durability, and other properties, and is commonly 2 to 50 g/$m^2$, and preferably 5 to 20 g/$m^2$. It is undesirable to use the adhesive in an amount exceeding 60 g/$m^2$ because the hand of the laminated fabric will be too hard. If the amount of adhesive is less than 2 g/$m^2$, the adhesion will be inadequate, and the resulting durability will be inadequate to withstand simple laundering.

Adhesion durability between the rear-surface fabric and film can be evaluated by confirming the absence of fabric peeling or other problems encountered during repeated laundering when using an ordinary washing machine. The adhesion durability of the laminated fabric of film and rear-surface fabric of the present invention is 50 hours or longer, and preferably 100 hours or longer when considered in terms of the number of hours until peeling can be visually observed after the fabric has been laundered under continuous agitation in detergent-free tap water at a bath ratio of 1/60 and a bath temperature of 45°C or lower using a Kenmore Model 110, 20912 (Sears, Roebuck and Co.) as a type B domestic washing machine according to ISO 6330 set to heavy-duty mode.

The order in which the laminated fabric of the present invention is fabricated can be a method whereby the front-surface fabric and film are laminated using a temporary adhesive and the rear-surface fabric is then laminated using a permanent adhesive on the resulting laminated fabric consisting of the film and front-surface fabric, or a method whereby the rear-surface fabric and film are laminated using a permanent adhesive and then the resulting laminated fabric consisting of the film and rear-surface fabric is laminated to the front-surface fabric using a permanent adhesive. When a water-soluble adhesive is used as the temporary adhesive, the product is heated to remove the moisture during the drying step. The effect of heat must therefore be taken into consideration if the permanent adhesive is a moisture-curable hot-melt urethane adhesive in an uncured state or the like.

The laminated fabric of the present invention can be used as a material for a variety of textile products. Conventional methods that incorporate a cutting and stitching step can be used to manufacture textile products using the laminated fabric of the present invention; however, some or all of the stitched regions of the textile product are preferably treated with seam tape when the textile product is used for rain or cold weather gear that must be waterproof and windproof.

A sewing machine is employed when the laminated fabric of the present invention is to be stitched. The stitching thread can be cotton, silk, hemp, nylon, polyester, vinylon, polynosic, polyurethane, or another material; and may be used singly or in combinations. Nylon thread and polyester thread are preferred from the standpoints of strength and heat resistance. The thickness of the thread must be adjusted according to the thickness of the fabric to be stitched and the requisite product strength. For instance, 233 decitex stitching thread is preferably used when the fabric to be stitched has a structure in which stretched porous polytetrafluoroethylene is laminated on one side of a front-surface fabric (78 decitex nylon taffeta) using a temporary adhesive and then a rear-surface fabric (25 decitex nylon tricot) is laminated on the other side of the film using a permanent adhesive.

Stitching is performed using one or a plurality of threads. The stitch type can be a lock stitch, single chain stitch, double chain stitch, or another type of stitch, and the stitches can be in a straight, curved, zigzag, or other configuration.

Examples of suitable seam tapes include those obtained by laminating an outermost layer of a high-melting-point resin and a low-melting-point adhesive resin. A knit fabric or mesh can be laminated on the surface of this high-melting-point resin. For example, a polyurethane resin film may be used for the high-melting-point resin and a polyurethane hot melt for the low-melting-point resin. Examples of suitable product brands include T-2000 and FU-700 (Sun Chemical Corporation), MF-12T, MF-12T2, and MF-102F (Nisshinbo Industries, Inc.), and GORE-SEAM® Tape (Japan Gore-Tex, Inc.), which uses porous polytetrafluoroethylene resin film as the high-melting-point resin and polyurethane hot melt as the low-melting-point adhesive resin.

The resin thickness of the hot melt portion of the seam tape is preferably 25 $\mu$m to 400 $\mu$m, and particularly 50 $\mu$m to 200 $\mu$m. If the hot melt layer is thinner than 25 $\mu$m, the absolute amount of resin will be too small, and it will be impossible to bond the rear-surface fabric and the thread irregularities of the stitched portions with adequate adhesive strength. On the other hand, if the hot melt layer is thicker than 400 $\mu$m, it will take time for the layer to thoroughly melt when the tape is thermocompressed, and workability will deteriorate. If the thermocompression time is reduced, the sheet will not sufficiently dissolve, and it will be impossible to obtain sufficient adhesive strength. The hand of the stitched regions will also harden; e.g., the seams will stiffen when the product is used in clothing.

These seam tapes can be fused with a conventional hot air sealer whereby a pressure roll is used to press and laminate the tape on a non-adhering body, with the resin being in a molten state as a result of the hot melt side of the

tape having been exposed to hot air. Examples of hot-air sealers that may be used include the Queen Lite Model QHP-805 (Queen Lite Electronic Industries Ltd.), or the Model 5000E (W. L. Gore & Associates).
Moreover, sealing can also be performed with a commercial iron in order to fuse the short stitched parts in a simpler manner. In such circumstances, heat is applied from above, with the tape being placed over the stitched part.
The thermocompression conditions used for the seam tape should be suitably selected according to the melting point of the hot melt used for the tape, and the thickness, material, and fusing speed of the waterproof fabric, as well as other factors. An example shall now be provided in which a seam tape is thermocompressed. A laminated fabric is obtained by laminating a porous polytetrafluoroethylene film on one side of a front-surface fabric (78 decitex nylon taffeta) using a water-soluble adhesive and also laminating a rear-surface fabric (25 decitex nylon tricot knit) with a water-insoluble adhesive. If the nylon tricot surfaces are to be thermocompressed using the above-mentioned seam tape, the seam tape (which is preferably a polyester urethane hot melt having a fluidity of 40 to 200 $\times$ $10^{-3}$ $cm^3/s$, particularly 100 $\times$ $10^{-3}$ $cm^3/s$ at 180°C; and a thickness of 25 to 200 $\mu$m, and particularly 50 to 150 $\mu$m) is loaded into the hot air sealer, and thermocompression is performed once the surface temperature of the hot melt resin has been set to rise from 150°C to 180°C, and preferably to 160°C. The heated component is then left to cool to room temperature, and the thermocompression is concluded. If fluidity of the hot melt is too low, inadequate adhesive strength will result, while if the fluidity is too high, the resin will inevitably bleed from the stitching holes, and adhere to the pressure roll or the like. If the surface temperature of the hot melt resin is too low, the resin will not thoroughly melt, which will lead to insufficient adhesive strength. Conversely, if the temperature is too high, the hot melt resin will become too fluid, problems will be encountered with the resin bleeding from the stitched regions, and the hot melt resin itself will pyrolyze, which may cause the adhesive strength to decline.

Textile products made from the laminated fabric of the present invention are submitted to an aftertreatment after having been fabricated in order to peel the durable film off the front-surface fabric. In such circumstances, the aftertreatment should be suitably selected according to the type of temporary adhesive used to temporarily bond the film and the top-surface fabric. For instance, the temporary adhesive should be removed with a water rinse if its adhesive strength declines due to the action of water, the adhesive should be treated with heat if its adhesive strength is reduced due to the action of heat, and the adhesive should be treated with ultraviolet rays if its adhesive strength declines due to the action of UV radiation.

When the textile product is made from a laminated fabric obtained using a water-soluble adhesive as the temporary adhesive, the aftertreatment can generally be performed by rinsing the product in an aqueous system. For instance, when jeans are made using the laminated fabric of the present invention and a rinsing step is included in the production process, the rinsing step can readily be employed to peel the film from the front-surface fabric. In such circumstances, a desizing agent or other washing additive may be added to the water to completely remove the water-soluble adhesive. This step may also be combined with enzymatic bleaching, stone washing, or another step.

The textile product of the present invention may assume a variety of configurations; e.g., gloves, coats, undergarments, hats, stockings, leggings, neck scarves, and cloth diapers.

[Working Examples]

The present invention shall be described in detail below with reference to working examples.

Working Example 1

18 $g/m^2$ of a solution (water-soluble adhesive) comprising a mixture of 0.1 wt% of a surfactant (Asahi Chemical Industry Co., Ltd.; AG Stabilizer S) in an aqueous solution of polyvinyl alcohol (Sanwa Yushi Co., Ltd.; Poval detergent paste) was transferred at room temperature using a gravure roll that had a surface coverage of 45% to the polyurethane side of a composite film having a mass per unit surface area of 33 $g/m^2$ that was fabricated from expanded porous polytetrafluoroethylene film (porosity: 80%, maximum pore diameter: 0.2 $\mu$m, average thickness: 30 $\mu$m) and a polyurethane consisting of a diphenyl methane diisocyanate and a polyol, resulting in a waterproof, moisture-permeable durable film. A roll was then used to press a plain-weave polyester fabric having a mass per unit surface area of 170 $g/m^2$, a density of 174 threads/inch and 94 threads/inch respectively in the warp and weft directions, and a denier of 56 decitex and 71 decitex respectively in the warp and weft directions onto the surface of the resulting film as the top-surface fabric. The film and fabric were bonded by evaporating off the water component from the aqueous polyvinyl alcohol solution in a hot air oven heated to 110°C. A hot-melt curable urethane adhesive (National Starch and Chemical Company; "Bond Master", 170-7254) was brought to an adhesive temperature of 120°C, and the melt was spottedly applied onto the other side of the composite film laminated with this top-surface film as the water-insoluble adhesive so that 5 $g/m^2$ of adhesive was transferred. A 25 decitex nylon tricot knit fabric having a mass per unit surface area of 33 $g/m^2$ was applied thereon and compression-laminated with a roll. The resulting laminate was left to stand for 24 hours in a thermostatic high-humidity chamber at 60°C and 80% RH to cure the reacting-type hot-melt adhesive. A laminated

fabric (1) was accordingly obtained. The fabric could be easily cut with scissors or a cutter knife without peeling. It was also confirmed that pieces of the cut fabric could be stitched together using a sewing machine.

Working Example 2

A laminated fabric (2) was made using a nylon plain woven fabric having a mass per unit surface area of 67 $g/m^2$, a density of 120 threads/inch and 88 threads/inch respectively in the warp and weft directions, and a denier of 78 decitex for both the warp and the weft directions, with the water-soluble adhesive transferred to the durable film in Working Example 1 being used in an amount of 12 $g/m^2$, and the other materials and methods being the same as in Working Example 1. The resulting laminated fabric (2) could be easily cut with scissors or a cutter knife without peeling. It was also confirmed that pieces of the cut fabric could be stitched together using a sewing machine.

Working Example 3

A laminated fabric (3) was made using a nylon plain woven fabric having a mass per unit surface area of 52 $g/m^2$, a density of 153 threads/inch and 122 threads/inch respectively in the warp and weft directions, and a denier of 44 decitex in both the warp and weft directions, with the water-soluble adhesive transferred to the durable film in Working Example 1 being used in an amount of 12 $g/m^2$, and the other materials and methods being the same as in Working Example 1. The resulting laminated fabric (3) could be easily cut with scissors or a cutter knife without peeling. It was also confirmed that pieces of the cut fabric could be stitched together using a sewing machine.

Working Example 4

A laminated fabric (4) was made using a nylon plain woven fabric having a mass per unit surface area of 67 $g/m^2$, a density of 120 threads/inch and 88 threads/inch respectively in the warp and weft directions, and a denier of 78 decitex in both the warp and weft directions, with the water-soluble adhesive transferred to the durable film in Working Example 1 being used in an amount of 10 $g/m^2$, and the other materials and methods being the same as in Working Example 1. The resulting laminated fabric (4) could be easily cut with scissors or a cutter knife without peeling. It was also confirmed that pieces of the cut fabric could be stitched together using a sewing machine.

Comparative Example 1

A laminated fabric (11) was obtained using the same front-surface fabric, durable film, and rear-surface fabric as used in Working Example 1, with the urethane curable hot-melt adhesive in Working Example 1 being used as the water-insoluble adhesive for bonding the front-surface fabric and durable film (amount transferred: 18 $g/m^2$; 45% coverage), and the water-soluble adhesive used in Working Example 1 (10 $g/m^2$) being used to bond the rear-surface knit fabric and durable film.

Comparative Example 2

A laminated fabric (12) was obtained using the same front-surface fabric, durable film, and rear-surface fabric as used in Working Example 2, with the urethane curable reaction-type hot-melt adhesive in Working Example 1 being used as the water-insoluble adhesive for bonding the front-surface fabric and durable film (amount transferred: 10 $g/m^2$; 45% coverage), and the water-soluble adhesive used in Working Example 1 (10 $g/m^2$) being used to bond the rear-surface knit fabric and durable film.

Comparative Example 3

Laminated fabric (13) was obtained using the same front-surface fabric, durable film, and rear-surface fabric as used in Working Example 3, with the urethane curable reaction-type hot-melt adhesive in Working Example 1 being used as the water-insoluble adhesive for bonding the front-surface fabric and durable film (amount transferred: 8$g/m^2$ ; 40% coverage), and the water-soluble adhesive used in Working Example 1 (10 $g/m^2$) being used to bond the rear-surface knit fabric and durable film.

Comparative Example 4

Laminated fabric (14) was made using a nylon plain weave fabric having a mass per unit surface area of 39 $g/m^2$, a density of 140 threads/inch and 133 threads/inch respectively in the warp and weft directions, and a denier of

33 decitex in both the warp and weft directions, with the water-soluble adhesive in Working Example 1 transferred to the durable film being used in an amount of 10 g/$m^2$, and the other materials and methods being the same as in Working Example 1.

Comparative Example 5

Laminated fabric (15) was obtained using the same front-surface fabric, durable film, and rear-surface fabric as used in Working Example 4, with the urethane curable hot-melt adhesive in Working Example 1 being used as the water-insoluble adhesive for bonding the front-surface fabric and durable film (amount transferred: 10 g/$m^2$; 45% coverage), and the water-soluble adhesive used in Working Example 1 (10 g/$m^2$) being used to bond the rear-surface knit fabric and durable film.

Comparative Example 6

Laminated fabric (16) was made using the same front-surface fabric, durable film, and rear-surface fabric as in Working Example 4, with the water-insoluble adhesive transferred to bond the rear-surface fabric being used in an amount of 5 g/$m^2$, and the other materials and methods being the same as in Working Example 4.

(Evaluation of characteristics)

The characteristics of the various laminated fabrics obtained in Working Examples 1 through 4 and Comparative Examples 1 through 6 were evaluated as described hereunder.

(1) Cutting and stitching performance

Each of the laminated fabrics could be cut as a single unit using scissors or a cutter knife without any peeling of the front-surface fabric, durable film, or rear-surface fabric. It was also confirmed that the cut pieces could be stitched together with a sewing machine.

(2) Fabric basis weight

The fabric basis weight was calculated as the value obtained by subtracting the mass of the water-soluble adhesive from the mass of laminated fabric.

(3) Hand test

(Pretreatment)

Each laminated fabric was cut into a 20 cm/side square whose periphery was stitched with a sewing machine. The sample was then laundered on the automatic cycle using a fully-automatic domestic washing machine (National, NA-F70PX1) and tap water (detergent-free). The laundered product was hung up to dry at room temperature to obtain a sample.

(Hand)

A pure bending tester (Kato Tech Co., Ltd., KES-FB2) was used to test the flexural properties of the samples as the physical characteristics relating to the hand of these treated samples. The results are shown in Table 1.

(Texture)

Hand was rated according to the type of texture of each treated sample. The samples were ranked in accordance with the following criteria. The results are shown in Table 1.

⊙: Very soft
○: Soft
Δ: Stiff
×: Very stiff

(4) Seam shifting after laundering

Each of the laminated fabrics was cut into a 35 cm x 70 cm rectangle whose periphery was stitched to prevent fraying. The samples were then laundered on the automatic cycle using a fully-automatic domestic washing machine (National, NA-F70PX1) and tap water (detergent-free) and hung to dry at room temperature. The front- and rear-surface fabrics of the dried samples were visually checked for any anomalies in appearance, including seam shifting. The samples were checked again after the above-mentioned laundering cycle had been repeated ten times, and the product was hung up to dry. The results are shown in Table 1. The number in parentheses shows the number of locations in which damage was visually observed. "Many" as noted in the table refers to damage having occurred over the entire surface. .

(5) Soil release tests

Each of the laminated fabrics was cut into a 38 cm/side square whose periphery was stitched with a sewing machine. The samples were then laundered on the automatic cycle using a fully-automatic domestic washing machine (National, NA-F70PX1) and tap water (detergent-free), and hung to dry at room temperature, yielding samples for soil release tests. 0.2 mL of mineral oil (Kanto Kagaku) was then dropped onto the middle of the surface of this fabric, glassine paper (Nippon Paper Industries; thin white glassine) was laid thereupon and a 2,268 g iron weight with a diameter of 6.4 cm was then placed on top of the paper. The weight was removed 60 sec later to yield soiled samples.

The soiled samples were laundered once on the automatic cycle using the above-mentioned fully-automatic domestic washing machine after adjusting the amount of soiled samples and adjacent fabric (No. 3 (cotton) as prescribed in JIS L0803) to 1.8 kg and introducing 20 g of domestic laundry detergent (Kao Corporation; "Attack"). The samples were then hung up to dry overnight at room temperature. The extent to which the soiling had been released in the resulting samples was graded over five levels by making a visual comparison with a stain release replica obtained with AATCC Test Method 130-1981 Soil Release: Oily Stain Release Method. The results are shown in Table 1. Five represents optimal soil release properties and one represents minimal soil release properties.

(6) Recyclability

The ratio of the mass percentage of peelable fabric to the value obtained by subtracting the mass of the water-soluble adhesive from the mass of each laminated fabric (i.e., the fabric basis weight) was calculated and used as the recycling rate. The results of the calculations are shown in Table 1.

(7) Laundering durability

Each laminated fabric was cut into a 35 cm x 70 cm rectangle whose periphery was stitched with a swing machine to prevent fraying. The samples were then subjected to continuous agitation and laundering in detergent-free tap water at a bath ratio of 1/60 and a bath temperature of 45°C or lower using a Kenmore Model 110, 20912 (Sears, Roebuck and Co.) as a type B domestic washing machine according to ISO 6330 set to heavy-duty mode. The samples were visually checked to assess whether peeling occurred in the rear-surface fabric or front-surface fabric and film that had been laminated using the water-insoluble adhesive. If no peeling occurred, the sample was rated as having passed. The results are shown in Table 1.

(8) Water resistance of seams

Each laminated fabric was stitched as shown in Figure 2, and the stitched regions were sealed with commercial seam tape (Sun Chemical Corporation; T-2000). The taped portions were then subjected to water-resistance tests by being laundered once on the automatic cycle using the above-mentioned fully-automatic washing machine and tap water (detergent-free), and then hung up to dry. The water-resistance tests were conducted in accordance with JISL1092 method A (low-water-pressure method). The test results are shown in Table 2.

| Laminated fabric | Mass ($g/cm^3$) | | | Amount of water-insoluble adhesive used | Basis weight of fabric | Density of front-surface fabric | | Hand: Bending moment (cN · cm) | | Texture: Hand | State of slippage after laundering | | Soil releaseability AATCC 130 | Recyclability | State of soil release 50 hrs after laundering |
|---|---|---|---|---|---|---|---|---|---|---|---|---|---|---|---|
| | Front | Film | Rear | ($g/m^2$) | ($g/m^2$) | Warp | Weft | Warp | Weft | | Front | Rear | | (wt%) | |
| W.E.1 | 170 | 33 | 33 | 5 | 241 | 174 | 94 | 0.22 | 0.59 | ○ | None | None | 3 | 70.5 | Pass |
| W.E.2 | 67 | 33 | 33 | 5 | 138 | 120 | 88 | 0.09 | 0.08 | ⊙ | None | None | 4 | 48.6 | Pass |
| W.E.3 | 52 | 33 | 33 | 5 | 123 | 153 | 122 | 0.08 | 0.06 | ⊙ | None | None | 3 | 42.3 | Pass |
| W.E.4 | 67 | 33 | 67 | 10 | 177 | 120 | 88 | 0.19 | 0.16 | ○ | None | None | 4 | 37.6 | Pass |
| C.E.1 | 170 | 33 | 33 | 18 | 254 | 174 | 94 | 0.40 | 1.01 | x | None | Many | 2 | 13.0 | Pass |
| C.E.2 | 67 | 33 | 33 | 10 | 143 | 120 | 88 | 0.14 | 0.10 | ○ | None | Many | 3 | 23.1 | Pass |
| C.E.3 | 52 | 33 | 33 | 8 | 126 | 153 | 122 | 0.11 | 0.09 | ○ | None | Many | 2 | 26.2 | Pass |
| C.E.4 | 39 | 33 | 33 | 5 | 110 | 140 | 133 | 0.07 | 0.06 | ⊙ | 4 | None | 3 | 35.5 | Pass |
| C.E. 5 | 67 | 33 | 67 | 10 | 177 | 120 | 88 | 0.19 | 0.16 | ○ | None | None | 3 | 37.9 | Pass |
| C.E.6 | 67 | 33 | 67 | 5 | 172 | 120 | 88 | 0.15 | 0.12 | ○ | None | None | 4 | 39.0 | Fail |

["W.E." = working example; "C.E." = comparative example]

[Table 2]

| Results of seam water resistance test | |
|---|---|
| Laminated fabric | Water resistance |
| Working Example 1 | ≥ 20 kPa |
| Working Example 2 | ≥20kPa |
| Working Example 3 | ≥20 kPa |
| Comparative Example 5 | < 5 kPa |

(Evaluation results)

(Fabric basis weight)

Based on the results shown in Table 1, the basis weights of the fabrics in Working Example 2 and Comparative Example 2 (138 g/$m^2$ and 143 g/$m^2$ respectively) are substantially the same. Nevertheless, laundering caused seam shifting to occur in the lightweight rear-surface knit in Comparative Example 2, which rendered the fabric unsuitable for practical application. On the other hand, the problems related to seam shifting in the rear-surface fabric in Comparative Example 2 did not occur with Comparative Example 5, but its weight was 177 g/$m^2$, or approximately 30% heavier than in Working Example 2.

(Hand)

According to Table 1, if the laminated fabrics of the working examples have the same combination of front- and rear-surface fabrics, and the bending moment of the comparative examples is taken to be 100, the physical characteristics will decrease by 20% to 50%; a laminated fabric with soft hand is accordingly obtained with the present invention. It is also clear from Table 1 that the evaluation of hand according to texture produced the same results obtained with the bending moment.

Seam shifting after laundering

According to Table 1, seam shifting after laundering tended to occur with lighter-weight fabrics, and subjecting the 33 decitex fabric that had not been laminated with a water-insoluble adhesive (Comparative Example 4) to ten cycles of laundering in the domestic washing machine damaged the fabric in four places. When 25 decitex nylon tricot knit fabrics that had not been laminated with a water-insoluble adhesive were laundered (Comparative Examples 1 through 3), the knit fabrics suffered damage in several places as a result of the laundering. The results also indicate that fabric damage related to seam shifting after laundering can be prevented if the front-surface fabric is at least 33 decitex; e.g., when a 44 decitex fabric is used. The incidence of damage to the rear-surface fabric will also improve if the rear-surface fabric has been laminated with water-insoluble adhesive, which indicates that there are no particular restrictions as to the rear-surface fabric employed.

(Soil release properties)

It is clear from Table 1 that fabrics consisting of a laminated structure wherein the front-surface fabric is merely laid over the durable film have better soil release properties than fabrics where the same type of front-surface fabric is laminated on the durable film with a water-insoluble adhesive. Specifically, the soil release properties of Working Example 2 were given a grade of 4, while those of Comparative Example 2 were given a grade of 3. Also, whereas the soil release properties of Working Example 3 were given a grade of 3, those of Comparative Example 3 were given a grade of 2. This outcome is believed to be due to the fact that in the present invention, the front-surface fabric is laundered separately from the durable film, by which means the laundering solution will readily penetrate the front-surface fabric, thereby improving the soil release properties.

(Recycling rate)

The percentage of fabric that can be submitted for material recycling in Working Examples 1 through 4 and Comparative Examples 1 through 6 is shown in Table 1. By comparing the data for laminated fabrics that have been made from the same front-surface fabric and rear-surface fabric, it is clear that the laminated fabrics of the present invention all exhibit a high recycling rate. In other words, it is clear that whereas the recycling rate is approximately 70% in Working Example 1, the recycling rate in Comparative Example 1 is approximately 13%, which reveals that the mass percentage that can be recycled in is largely reduced. Although this difference decreases with front-surface fabrics having a lower basis weight, the recycling rate virtually doubles with front-surface fabrics of 77 decitex, which is a dramatic improvement over the prior art recycling rate.

(State of peeling after laundering)

The results of the peeled state of the fabric after 50 hours of laundering are shown in Table 1. Working Example 2 was judged to have passed because 10 g/$m^2$ of water-insoluble adhesive was used to bond the rear-surface fabric, but Comparative Example 6 was judged not to have passed because its adhesion durability was poor, and 5 g/$m^2$ of water-insoluble adhesive was used.

(Water-resistance of seams)

The results obtained by testing the water-resistance of seams made from the laminated fabrics of Working Examples 1 through 3 and Comparative Example 5 are shown in Table 2. Each of the laminated fabrics in the working examples exhibited a water resistance of 20 kPa or higher, which was satisfactory; however, the water resistance of Comparative Example 5 was poor, with water leakage being observed at 5 kPa. This outcome was due to the high rear-surface fabric density, and the inability of the seam tape adhesive to penetrate thoroughly into the rear-surface fabric, which inevitably resulted in water penetrating into the space between the rear-surface fabric and durable film.

[Effect of the Invention]

The laminated fabric of the present invention exhibits the following exceptional effects as a result of having a laminated structure characterized in that a temporary adhesive is used between the front-surface fabric and the durable film, and a permanent adhesive is used on the other side of the durable film.

(1) Minimal permanent adhesive is used, which enables the product to be lightweight, the hand of the front-surface fabric to remain constant, and exceptional softness to be obtained.
(2) The rear-surface fabric is secured in place to the durable film; therefore, damage to the fabric caused by laundering or the like can be prevented even if a light rear-surface fabric is used, and the rear-surface fabric may be selected from a wide variety of fabrics.
(3) The fabric is laundered with the front-surface fabric being separate from the durable film, and accordingly exhibits exceptional soil release properties.
(4) The front-surface fabric can be separated, which allows exceptional material recyclability.

Using the laminated fabric of the present invention will also enable textile products having such exceptional effects to be provided.

[Brief Description of the Drawings]

[Figure 1]

Drawing illustrating the structure of the laminated fabric of the present invention.
Drawing illustrating the state where the stitched regions of the laminated fabric of the present invention are sealed.

[Key]

1 Front-surface fabric
2 Temporary adhesive

3 Durable film
4 Permanent adhesive
5 Rear-surface fabric
6 Seam tape
7 Stitched region

## Claims

1. A laminated fabric (1a), **characterized in** having a structure where a temporary adhesive layer (2) is used to laminate a front-surface fabric (1) on one side of a polymer film (3), when the fabric is subjected to an after treatment, the temporary adhesive layer allows the front-surface fabric and the polymer film to be peeled apart; and a permanent adhesive layer (4) is used to laminate a rear-surface fabric (5) intended to come in contact with the body of a wearer in use, on the remaining side of the polymer film.

2. The laminated fabric according to claim 1, **characterized in that** the polymer film (3) is a waterproof, moisture-permeable film.

3. The laminated fabric according to claim 2, **characterized in that** the waterproof, moisture-permeable film is a porous polytetrafluoroethylene film.

4. The laminated fabric according to claim 3, **characterized in that** the surface of the porous polytetrafluoroethylene film is coated with a water/oil repellent.

5. The laminated fabric according to claim 3 or 4, **characterized in that** a continuous coating of a hydrophilic resin is provided to one or both sides of the porous polytetrafluoroethylene film.

6. The laminated fabric according to any of claims I through 5, **characterized in that** the basis weight of the front-surface fabric is greater than the basis weight of the rear-surface fabric.

7. The laminated fabric according to any of claims 1 through 6, **characterized in that** the front-surface fabric is a woven fabric and the rear-surface fabric is a knit fabric.

8. The laminated fabric according to any of claims 1 through 7, **characterized in that** the temporary adhesive is a water-soluble adhesive.

9. A textile product, **characterized in** comprising the laminated fabric according to any of claims 1 through 8.

10. The textile product according to claim 9, **characterized in that** some or all of the stitched regions in the textile product are seal-treated with seam tape (6).

11. The textile product according to claim 9 or 10, **characterized in that** the textile product is subjected to an aftertreatment for separating the front-surface fabric and the polymer film, and the front-surface fabric and polymer film are peeled apart.

12. The textile product according to claim 11, **characterized in that** the temporary adhesive is a water-soluble adhesive, and the aftertreatment is a water-rinse treatment.

13. The textile product according to any of claims 9 through 12, **characterized in** being rain or cold weather gear.

14. A method for manufacturing a textile product, **characterized in that** the laminated fabric according to any of claims 1 through 8 is cut and stitched to make a textile product, after which an aftertreatment is performed whereby the front-surface fabric (1) and polymer film (3) are peeled apart.

15. A method for manufacturing a textile product, **characterized in that** the laminated fabric according to any of claims 1 through 8 is cut and stitched, after which the seams are seal-treated with seam tape to make a textile product, and an aftertreatment is performed whereby the front-surface fabric (1) and the polymer film (3) are peeled apart.

## Patentansprüche

1. Laminierter Textilstoff (1a), **dadurch gekennzeichnet, dass** er eine Struktur aufweist, bei der eine vorübergehende Klebstoffschicht (2) zum Laminieren eines Außenseitentextilstoffs (1) auf einer Seite einer Polymerfolie (3) verwendet wird, wobei, wenn der Textilstoff einer Nachbehandlung unterworfen wird, die vorübergehende Klebstoffschicht es gestattet, den Außenseitentextilstoff und die Polymerfolie von einander abzulösen; und eine permanente Klebstoffschicht (4) zum Laminieren eines Rückseitentextilstoffs (5), der beim Tragen mit dem Körper eines Trägers in Kontakt kommen soll, auf der verbleibenden Seite der Polymerfolie verwendet wird.

2. Laminierter Textilstoff nach Anspruch 1, **dadurch gekennzeichnet, dass** die Polymerfolie (3) eine wasserfeste, feuchtigkeitsdurchlässige Folie ist.

3. Laminierter Textilstoff nach Anspruch 2, **dadurch gekennzeichnet, dass** die wasserfeste, feuchtigkeitsdurchlässige Folie eine poröse Polytetrafluorethylenfolie ist.

4. Laminierter Textilstoff nach Anspruch 3, **dadurch gekennzeichnet, dass** die Oberfläche der porösen Polytetrafluorethylenfolie mit einem Wasser-/Ölabstoßungsmittel beschichtet ist.

5. Laminierter Textilstoff nach Anspruch 3 oder 4, **dadurch gekennzeichnet, dass** eine kontinuierliche Beschichtung aus einem hydrophilen Harz auf einer oder beiden Seiten der porösen Polytetrafluorethylenfolie bereitgestellt wird.

6. Laminierter Textilstoff nach einem der Ansprüche 1 bis 5, **dadurch gekennzeichnet, dass** das Flächengewicht des Außenseitentextilstoffs höher ist als das Flächengewicht des Rückseitentextilstoffs.

7. Laminierter Textilstoff nach einem der Ansprüche 1 bis 6, **dadurch gekennzeichnet, dass** der Außenseitentextilstoff ein gewobener Textilstoff und der Rückseitentextilstoff ein gestrickter Textilstoff ist.

8. Laminierter Textilstoff nach einem der Ansprüche 1 bis 7, **dadurch gekennzeichnet, dass** der vorübergehende Klebstoff ein wasserlöslicher Klebstoff ist.

9. Textilprodukt, **dadurch gekennzeichnet, dass** es den laminierten Textilstoff nach einem der Ansprüche 1 bis 8 umfasst.

10. Textilprodukt nach Anspruch 9, **dadurch gekennzeichnet, dass** ein Teil oder alle der genähten Bereiche in dem Textilprodukt mit Nahtband (6) versiegelnd behandelt werden.

11. Textilprodukt nach Anspruch 9 oder 10, **dadurch gekennzeichnet, dass** das Textilprodukt einer Nachbehandlung unterworfen wird zum Trennen des Außenseitentextilstoffs und der Polymerfolie, und der Außenseitentextilstoff und die Polymerfolie von einander abgelöst werden.

12. Textilprodukt nach Anspruch 11, **dadurch gekennzeichnet, dass** der vorübergehende Klebstoff ein wasserlöslicher Klebstoff ist und die Nachbehandlung eine Wasserspülbehandlung ist.

13. Textilprodukt nach einem der Ansprüche 9 bis 12, **dadurch gekennzeichnet, dass** es eine Regen- oder Kaltwetterschutzausrüstung ist.

14. Verfahren zur Herstellung eines Textilprodukts, **dadurch gekennzeichnet, dass** der laminierte Textilstoff nach einem der Ansprüche 1 bis 8 zugeschnitten und genäht wird, um ein Textilprodukt herzustellen, woraufhin eine Nachbehandlung durchgeführt wird, wodurch der Außenseitentextilstoff (1) und eine Polymerfolie (3) von einander abgelöst werden.

15. Verfahren zur Herstellung eines Textilprodukts, **dadurch gekennzeichnet, dass** der laminierte Textilstoff nach einem der Ansprüche 1 bis 8 zugeschnitten und genäht wird, woraufhin die Nähte mit Nahtband versiegelnd behandelt werden, um ein Textilprodukt herzustellen, und eine Nachbehandlung durchgeführt wird, wodurch der Außenseitentextilstoff (1) und eine Polymerfolie (3) von einander abgelöst werden.

## Revendications

1. Tissu contrecollé (la), **caractérisé en ce qu'**il présente une structure dans laquelle une couche adhésive temporaire (2) est utilisée pour contrecoller un tissu en face avant (1) sur un côté d'un film polymère (3), lorsque le tissu est soumis à un post-traitement, la couche adhésive temporaire permet au tissu en face avant et au film polymère d'être décollés séparément, et une couche adhésive permanente (4) est utilisée pour contrecoller un tissu en face arrière (5) prévu pour entrer en contact avec le corps d'un porteur dans l'utilisation sur le côté restant du film polymère.

2. Tissu contrecollé selon la revendication 1, **caractérisé en ce que** le film polymère (3) est un film perméable à l'humidité, imperméable à l'eau.

3. Tissu contrecollé selon la revendication 2, **caractérisé en ce que** le film perméable à l'humidité, imperméable à l'eau est un film poreux en polytétrafluoroéthylène.

4. Tissu contrecollé selon la revendication 3, **caractérisé en ce que** la surface du film poreux en polytétrafluoroéthylène est revêtue d'un répulsif de l'eau/huile.

5. Tissu contrecollé selon la revendication 3 ou 4, **caractérisé en ce qu'**un revêtement continu d'une résine hydrophile est fourni sur un ou les deux côtés du film poreux en polytétrafluoroéthylène.

6. Tissu contrecollé selon l'une quelconque des revendications 1 jusqu'à 5, **caractérisé en ce que** le poids de base du tissu de la face avant est supérieur au poids de base du tissu de la face arrière.

7. Tissu contrecollé selon l'une quelconque des revendications 1 jusqu'à 6, **caractérisé en ce que** le tissu de face avant est un tissu tissé et le tissu de face arrière est un tissu tricoté.

8. Tissu contrecollé selon l'une quelconque des revendications 1 jusqu'à 7, **caractérisé en ce que** l'adhésif temporaire est un adhésif soluble dans l'eau.

9. Produit textile, **caractérisé en ce qu'**il comprend le tissu contrecollé selon l'une quelconque des revendications 1 jusqu'à 8.

10. Produit textile selon la revendication 9, **caractérisé en ce qu'**une partie ou toutes les régions piquées dans le produit textile sont traitées pour obtenir l'étanchéité grâce à une bande de jointure (6).

11. Produit textile selon la revendication 9 ou 10, **caractérisé en ce que** le produit textile est soumis à un post-traitement pour séparer le tissu de face avant et le film polymère, et le tissu de face avant et le film polymère sont décollés l'un de l'autre.

12. Produit textile selon la revendication 11, **caractérisé en ce que** l'adhésif temporaire est un adhésif soluble dans l'eau, et le post-traitement est un traitement de rinçage à l'eau.

13. Produit textile selon l'une quelconque des revendications 9 jusqu'à 12, **caractérisé en ce qu'**il est un vêtement contre la pluie ou le froid.

14. Procédé de fabrication d'un produit textile, **caractérisé en ce que** le tissu contrecollé selon l'une quelconque des revendications 1 jusqu'à 8 est coupé et piqué pour fabriquer un produit textile, après quoi un post-traitement est effectué moyennant quoi le tissu de face avant (1) et le film polymère (3) sont décollés l'un de l'autre.

15. Procédé de fabrication d'un produit textile, **caractérisé en ce que** le tissu contrecollé selon l'une quelconque des revendications 1 jusqu'à 8 est découpé et piqué, après quoi les joints sont traités pour étanchéité grâce à une bande de jointure pour fabriquer un produit textile, et un post-traitement est effectué moyennant quoi le tissu de face avant (1) et le film polymère (3) sont décollés l'un de l'autre.

[Figure 1]

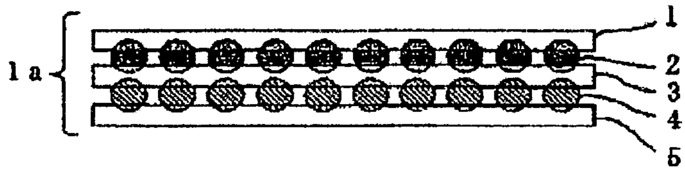


[Figure 2]

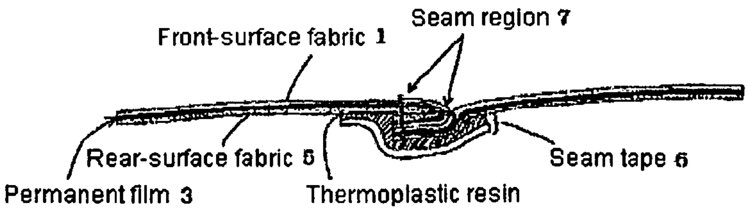

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6061909 B
- WO 9422928 A


### Non-patent literature cited in the description


- Bond Master. National Starch and Chemical Company, 170-7254